# FASCICULE DE BREVET EUROPEEN

(11) **EP 0 331 582 B1**
(45) Date de publication et mention de la délivrance du brevet: **17.08.1994**
(21) Numéro de dépôt: 89400580.0
(22) Date de dépôt: 02.03.1989
(51) Int. Cl.: B44D 3/16, B05D 5/00

(54) **Procédé pour décaper une couche de peinture de la surface d'un corps, tel que support ou chassis, et produits et compositions pour l'application de ce procédé**
Verfahren zum Entfernen einer Farbschicht von der Oberfläche eines Gegenstandes, wie z.B. Gestelle oder Rahmen und Produkte und Zusammenstellungen zum Durchführen des Verfahrens
Process for removing a layer of paint from the surface of an article such as a carrier or frame, products and compositions for carrying out the process

(30) Priorité: 04.03.1988 IT 1965288
(43) Date de publication de la demande: 06.09.1989
(73) Titulaire: S.I.O-SOCIETA PER L'INDUSTRIA DELL'OSSIGENO E DI ALTRI GAS, I-20148 Milan (IT); BETA RICERCHE & SVILUPPI DI Attilio Bernasconi & C. s.a.s., I-28015 Alzate di Momo (NO) (IT)
(72) Inventeur: Bernasconi, Attilio, I-28015 Alzate di Momo (NO) (IT)
(74) Mandataire: Vesin, Jacques

(56) Documents cités:
- EP-A- 0 147 984
- DE-A- 3 105 088
- DE-A- 3 436 132
- FR-A- 1 385 409

## Description

Sur le plan technique, on connâit le problème du décapage d'une couche de peinture d'un objet, pour pouvoir le revernir convenablement ou pour en ôter la peinture, que celle-ci soit passagère, non voulue, ou inévitable.

Dans la présente description, et pour simplification, la technique pour décaper une couche de peinture d'un objet sera définie par le terme "décapage".

En ce qui concerne le problème, objet du présent brevet, on sait par exemple, qu'après plusieurs cycles de travail, les châssis des installations de peinture sont inutilisables à cause de l'épaisse couche de peinture accumulée qui, d'une part, comporte une utilisation excessive de peinture et, d'autre part, un gaspillage quant à la consommation de chaleur dans la réaction de polymérisation au stade de la cuisson au four de ladite peinture. Il existe d'ailleurs d'autres problèmes comme les importantes augmentations de poids et l'isolation thermique progressive des châssis qui rendent toutes les méthodes de vernissage électrostatique inefficaices. Il est donc nécessaire de remplacer les châssis ou de décaper les couches de produit vernissant qui s'y sont accumulés pour leur rendre leur aspect d'origine grâce, notamment, au "décapage".

Plusieurs méthodes de décapage sont déjà connues :
Par exemple de la demande de brevet italien n° 20915 A/86, publiée sous le n° 1.204.905, il est connu de décaper les couches de peinture recouvrant un support en cassant ces couches par refroidissement à basse température avec des gaz liquides et en effectuant, éventuellement, une action mécanique correspondante de décapage définitif.

Cette technique d'immersion dans du gaz liquide est relativement efficace mais peut présenter, souvent, des aspects anti-économiques quant à l'utilisation et la consommation en grandes quantités dudit gaz et la nécessité d'une action mécanique prolongée avec, pour conséquence, des frais d'installation et de gestion.

La demande de brevet DE-A-3.436.132 décrit un procédé pour décaper une couche de peinture de la surface d'un support selon lequel on applique à la surface du support, préalablement, à la couche de peinture, une couche d'un matériau de pré-traitement ; ce dernier consiste en le FEP, le PTFE ou le PFA. Suite à quoi la couche de peinture peut être décapée au moyen d'un liquide cryogénique.

La demande de brevet EP-A-147.984 décrit un procédé permettant de décaper une couche de polyuréthane d'un substrat, au moyen d'un solvant. Selon ce procédé, on applique entre la surface du support et la couche de polyuréthane, une couche barrière dont la fonction principale consiste à protéger le support des solvants utilisés lors du décapage.

La demande de brevet DE - A - 3.105.088 décrit un procédé pour décaper une laque sur un support, selon lequel, préalablement à l'application de la laque, on recouvre le support avec un enduit. Celui-ci est en un matériau choisi de sorte que lorsque la laque est soumise à une température élevée elle se craquèle ou pèle. Le matériau constituant l'enduit est dérivé d'un silicone ou d'un polysiloxane.

Le but de la présente invention est de proposer un procédé perfectionné de décapage des couches de peinture, permettant une diminution ou même, dans certains cas, une élimination de la quantité de gaz liquide nécessaire au décapage ou du temps de rétention du support dans le gaz.

L'autre but de l'invention est de réduire ou, dans certains cas, d'éliminer l'action mécanique proprement dite de finissage effectuée pour un décapage total de la couche de peinture.

Pour atteindre ce but et obtenir d'autres avantages définis plus loin, la présente invention propose un procédé pour décaper une couche de peinture déposée et durcie sur la surface d'un support comportant les étapes suivantes :
a) on effectue un pré-traitement du support par application à sa surface d'un produit couvrant choisi parmi une peinture de pré-traitement à base de résines vinyliques et une peinture de pré-traitement à base de résines polyuréthanes ledit produit couvrant permettant de diminuer l'adhérence de la peinture à décaper sur le support,
b) on forme et on durcit ladite couche de peinture à décaper sur le support,
c) le cas échéant, on chauffe le support,
d) on décape ladite couche de peinture.

Pour la mise en oeuvre du procédé selon l'invention, on utilise, de préférence comme produit couvrant, une peinture de pré-traitement à base de résines vinyliques.

Il s'agira de préférence, d'un produit liquide obtenu avec une base de peinture vinylique dans un solvant tel que l'acétone, le toluène et le xylène, auquel on pourra ajouter de la poudre d'aluminium métallique (ou d'autres métaux ou non métaux, conducteurs électriques) et obtenir, grâce à des solvants chlorés et des solvants synthétiques, une viscosité optimale.

Ce produit aura, de préférence, une composition choisie parmi les suivantes :

| | |
|---|---|
| . peinture vinylique standard | 40 - 60 % |
| . peinture vinylique très résistante : | 20 - 40 % |
| . solvant chloré : | 10 - 20 %. |
| . solvant organique : | 5 - 20 % |

Ce produit peut également contenir 1-5 % de poudre d'aluminium ou d'autres matériaux conducteurs d'électricité assurant le contact électrique nécessaire pour un vernissage électrostatique.

Ce produit est inaltérable dans des bains de dégraissage alcalin ou de phospho-dégraissage acide, même à une température des bains de 70°C et ne peut pas non plus les polluer. Il supporte également des températures de l'air de l'ordre de 140°C pour un temps de rétention inférieur à 10 minutes, sans altérer ses propres caractéristiques physico-chimiques.

L'application du produit peut être effectuée par immersion du support qu'on laisse ensuite reposer pendant quelques minutes. On peut aussi arroser le support à l'aide d'un pistolet mixte à air et le laisser ensuite reposer pendant quelques minutes. Dans les deux cas, la viscosité du produit doit permettre un dépôt de même épaisseur, 20 microns environ, (viscosité de 15-18 secondes sur la "coupe" Ford n°4).

Ce produit de pré-traitement engendre, grâce à sa base vinylique, une action anti-adhérente, permettant aux couches de peinture de ne pas adhérer au support. Ces caractéristiques peuvent être améliorées par les particules de poudre d'aluminium qui rendent le pré-traitement hétérogène, diminuant les adhérences, que ce soit entre le produit et le support ou entre les molécules mêmes du produit.

Une autre caractéristique du produit consiste à libérer, sous l'effet de la chaleur de polymérisation dans la phase de cuisson de la couche de peinture et grâce à un mélange de solvants, un gaz qui, augmentant de volume, forme des bulles, de sorte que la surface d'adhérence des couches de peinture se trouve sensiblement diminuée, pouvant aller jusqu'à environ 50 %.

Selon un autre mode de mise en oeuvre du procédé selon l'invention, on utilisera, comme produit couvrant, une peinture de pré-traitement à base de résines polyuréthanes.

Il s'agira, de préférence, d'une peinture en poudre à base de résine polyuréthane aromatique, à polymérisation rapide, et haute valeur thixotropique (20 minutes X 160° C);
Cette peinture de pré-traitement peut contenir 5 % de poudre d'aluminium et d'autres matériaux conducteurs pour assurer le contact électrique nécessaire au vernissage électrostatique.

Ce produit est inaltérable dans les bains de dégraissage alcalin ou de phospho-dégraissage acide, même à une température des bains de 70° C et ne peut pas non plus les polluer. Il supporte aussi des températures de l'air de l'ordre de 250° C, pour un temps de rétention inférieur à 10 minutes, sans altérer ses propres caractéristiques physico-chimiques.

Ce produit est en général appliqué avec des systèmes de pulvérisation électrostatique qui permettent un dépôt d'un moins 100 microns sur le support brut (après la polymérisation). Ce produit est polymérisé par le passage dans l'air à 130-140° C pendant 5 minutes.

Ce pré-traitement produit une couche de séparation entre le support et la couche de peinture qui se forme ensuite. En effet, le produit, par sa forte thixotropie, a tendance à se liquéfier au cours de la polymérisation, c'est à dire qu'il a tendance à se comporter comme un thermoplastique plutôt que comme un thermo-durcisseur et donc à rendre instable l'adhérence entre les couches de peinture accumulées successivement. En outre, le produit à base de polyuréthane aromatique libère, au cours de la polymérisation, des composants sous forme gazeuse.

Ces gaz, sous l'effet des couches de peinture accumulées successivement sur le support, ne peuvent se libérer dans l'atmosphère et augmente de volume sous l'effet de la chaleur, créant au niveau de l'interface, entre le support et les couches de peinture, une zone poreuse composée de cellules ouvertes, très fragiles, rendant la couche de séparation encore plus instable.

Dans une autre forme de mise en oeuvre du procédé selon l'invention, celui-ci comporte, outre la phase définie ci-dessus, une phase de pré-traitement du support avant la formation de la couche de peinture à décaper.

Cette autre phase de pré-traitement est un traitement du support, avec un ou plusieurs acides, avant la phase de pré-traitement avec le produit couvrant.

En pré-traitant le support par immersion dans un bain acide (par ex. un mélange d'acides forts), on provoque une oxydation de toute la surface du support qui facilite l'adhérence du produit couvrant qui sera appliqué.

Cette phase est surtout utilisée pour les supports qui, par suite de nombreux traitements de sablage, présentent une surface irrégulière et sur laquelle le produit couvrant adhérerait plus difficilement.

Selon une autre forme de mise en oeuvre du procédé selon l'invention, celui-ci comprend une phase de réchauffement du support sur lequel s'est déjà formée la couche de peinture à décaper.

Au cours de cette phase, après le passage dans un four, le support est placé dans un courant d'air dont la température est comprise entre 150 et 250° C (de préférence entre 200 et 220° C), pendant 10 à 30 minutes (20 minutes de préférence).

Cette phase provoque une augmentation de la quantité de gaz formé dans le produit couvrant de la phase de pré-traitement et sa carbonisation, avec formation de cendres. Ces effets contribuent à augmenter l'instabilité de la couche de peinture à décaper.

Le procédé selon l'invention, après la phase de pré-traitement avec du produit couvrant, peut conduire aisément à la phase finale de mise en contact du support sur lequel s'est formée la couche de peinture à décaper avec au moins un gaz liquéfié, tel que l'azote liquide, selon la technique décrite dans la demande de brevet italien n° 20915 A/86 sus-mentionnée.

Le contact, entre support et gaz liquide cryogénique, produit une fragilisation avec rupture de la couche de peinture à décaper qui peut entraîner une séparation totale de ladite couche. Si cela ne se produit pas, on complétera la séparation et le décapage par une action mécanique, telle que le décapage, le sablage, le grenaillage, etc, manuelle ou automatique.

La phase finale d'immersion dans du gaz liquide est préférable mais pas indispensable.

En particulier, cette action peut être évitée lorsque le produit couvrant de la phase de pré-traitement est une peinture de pré-traitement à base de résines vinyliques. Dans ce cas, une action anti-adhérente et l'augmentation du gaz en phase de polymérisation permettront d'obtenir une séparation quasi totale de la couche à décaper.

L'invention sera mieux comprise à l'aide d'un exemple de réalisation, donné à titre non limitatif :

### EXEMPLE

Sur un support propre, destiné à porter des pièces à vernir, on procède à un pré-traitement en appliquant sur ce rapport un produit couvrant dont la composition est la suivante :

| | |
|---|---|
| 50 % | de peinture vinylique standard |
| 28 % | de peinture vinylique très résistante |
| 2 % | de poudre d'aluminium métallique |
| 12 % | de solvant chloré (1,1,1-trichloréthane) |
| 8 % | de solvant 1,2-dichloropropane, toluène |
| 1̅0̅0̅ %̅ | |

L'application est effectuée par immersion du support, pendant quelques minutes, dans un récipient contenant la composition sus-mentionnée.

La présente invention a également pour objet une installation propre à la réalisation du procédé décrit ci-dessus.

Par exemple, une installation propre à la réalisation du procédé d'invention comprend, dans la version automatique, un élévateur auquel sont suspendus les supports à traiter passant par les phases opératoires suivantes :
- immersion dans un récipient parfaitement isolé contenant le fluide cryogénique pour le temps nécessaire à cette phase,
- passage dans la grenailleuse avec de la grenaille calibre 2-6 mm pour décaper,
- séchage, à l'air, de la buée de condensation sur les supports,
- acidification dans un récipient en acier inoxydable contenant une solution d'acides forts,
- repos à température ambiante,
- application du pré-traitement liquide par immersion et pulvérisation ou application du pré-traitement par pulvérisation électrostatique,
- repos à température ambiante ou polymérisation à 130-140°C pendant 5 minutes,
- déchargement, chargement des supports.

Pour les modalités de construction, on se conformera aux normes d'utilisation et à l'emploi des fluides cryogéniques et à la demande de brevet N° 20915 A/86 précitée.

De manière générale, on comprend que le procédé selon l'invention facilite beaucoup le décapage d'une couche de peinture ou, d'une manière générale, de tout corps à décaper qui viendrait se former sur le support.

L'action de préparation du support est telle qu'elle réduit considérablement la consommation d'azote liquide ou de tout autre gaz liquéfié approprié nécessaire au décapage, qu'elle réduit également le temps de rétention du support dans le récipient de gaz liquéfié, et, enfin, qu'elle réduit l'ensemble de l'action mécanique nécessaire au décapage.

## Revendications

1. Procédé pour décaper une couche de peinture déposée et durcie sur la surface d'un support comportant les étapes suivantes :
a) on effectue un pré-traitement du support par application à sa surface d'un produit couvrant choisi parmi une peinture de pré-traitement à base de résines vinyliques et une peinture de pré-traitement à base de résines polyuréthanes, ledit produit couvrant permettant de diminuer l'adhérence de la peinture à décaper sur le support,
b) on forme et on durcit ladite couche de peinture à décaper sur le support,
c) le cas échéant, on chauffe le support,
d) on décape ladite couche de peinture.

2. Procédé selon la revendication 1 caractérisé en ce qu'on décape ladite couche de peinture par mise en contact du support avec au moins un gaz liquéfié, tel que l'azote liquide.

3. Procédé selon la revendication 2 caractérisé en ce qu'on immerge le support dans au moins un gaz liquéfié.

4. Procédé selon l'une des revendications 1 à 3 caractérisé en ce qu'il comporte une phase finale de décapage mécanique.

5. Procédé selon l'une des revendications 1 à 4 caractérisé en ce qu'au cours de l'étape c) on réchauffe le support à une température comprise entre 150 et 250°C, de préférence comprise entre 200 et 220°C.

6. Procédé selon l'une des revendications 1 à 5 caractérisé en ce qu'on durcit la couche de peinture sur le support par cuisson de ce dernier dans un four.

7. Procédé selon l'une des revendications 1 à 6 caractérisé en ce que l'étape a) est précédée par une phase de traitement du support avec un ou plusieurs acides.

8. Procédé selon l'une des revendications 1 à 7 caractérisé en ce que la peinture de prétraitement comporte un produit conducteur électrique.

9. Procédé selon la revendication 8 caractérisé en ce que le produit conducteur électrique est de l'aluminium en poudre.

10. Procédé selon l'une des revendications 1 à 9 caractérisé en ce que la peinture de pré-taitement est dissoute dans un ou plusieurs solvants.

11. Composition appropriée à la mise en oeuvre du procédé selon l'une des revendications 1 à 10, caractérisée en ce qu'elle comporte une peinture de pré-traitement à base de résines vinyliques et/ou une peinture de pré-traitement à base de résines polyuréthanes ou comportant des résines polyuréthanes, ainsi qu'un produit conducteur électrique.

12. Composition selon la revendication 11 caractérisée en ce que la peinture de pré-traitement est dissoute dans un ou plusieurs solvants.

13. Composition selon l'une des revendications 11 à 12, caractérisée en ce que ledit produit conducteur est composé d'aluminium en poudre.

14. Composition selon l'une des revendications 11 à 13, caractérisée en ce que la peinture de pré-traitement comprend une peinture vinylique standard.

15. Composition selon l'une des revendications 11 à 14, caractérisée en ce qu'elle comporte : 78 % de peinture vinylique, dont 50 % de peinture vinylique standard, 2 % de poudre d'aluminium, 12% de solvant chloré et 8% de 1-2-dichloropropane ou de toluène.

## Claims

1. Process for stripping a coat of paint deposited and cured on the surface of a substrate, comprising the following stages:
a) a pretreatment of the substrate is performed by applying to its surface a covering product chosen from a pretreatment paint based on vinyl resins and a pretreatment paint based on polyurethane resins, the said covering product making it possible to reduce the adhesiveness of the paint to be stripped to the substrate,
b) the said coat of paint to be stripped is formed and cured on the substrate,
c) the substrate is heated, if appropriate,
d) the said coat of paint is stripped.

2. Process according to Claim 1, characterized in that the said coat of paint is stripped by placing the substrate in contact with at least one liquefied gas, such as liquid nitrogen.

3. Process according to Claim 2, characterized in that the substrate is immersed in at least one liquefied gas.

4. Process according to one of Claims 1 to 3, characterized in that it comprises a final stage of mechanical stripping.

5. Process according to one of Claims 1 to 4, characterized in that during stage c) the substrate is heated to a temperature of between 150 and 250°C, preferably between 200 and 220°C.

6. Process according to one of Claims 1 to 5, characterized in that the coat of paint is cured on the substrate by baking the latter in an oven.

7. Process according to one of Claims 1 to 6, characterized in that stage a) is preceded by a stage of treatment of the substrate with one or more acids.

8. Process according to one of Claims 1 to 7, characterized in that the pretreatment paint comprises an electrically conductive product.

9. Process according to Claim 8, characterized in that the electrically conductive product is powdered aluminium.

10. Process according to one of Claims 1 to 9, characterized in that the pretreatment paint is dissolved in one or more solvents.

11. Suitable composition for making use of the process according to one of Claims 1 to 10, characterized in that it comprises a pretreatment paint based on vinyl resins and/or a pretreatment paint based on polyurethane resins or comprising polyurethane resins, as well as an electrically conductive product.

12. Composition according to Claim 11, characterized in that the pretreatment paint is dissolved in one or more solvents.

13. Composition according to either of Claims 11 and 12, characterized in that the said conductive product is composed of powdered aluminium.

14. Composition according to one of Claims 11 to 13, characterized in that the pretreatment paint includes a standard vinyl paint.

15. Composition according to one of Claims 11 to 14, characterized in that it comprises: 78 % of vinyl paint, including 50 % of standard vinyl paint, 2 % of aluminium powder, 12 % of chlorinated solvent and 8 % of 1,2-dichloropropane or toluene.

## Patentansprüche

1. Verfahren zum Entfernen einer Anstrichschicht, die auf der Oberfläche eines Trägers aufgetragen und ausgehärtet ist, umfassend die folgenden Schritte:
a) Durchführen einer Vorbehandlung des Trägers durch Auftragen eines Überzugsprodukts auf seiner Oberfläche, das aus einem Vorbehandlungsanstrich auf der Basis von Vinylharzen und einem Vorbehandlungsanstrich auf der Grundlage von Polyurethanharzen ausgewählt ist, wobei das Überzugsprodukt eine Verminderung der Haftung des vom Träger zu entfernenden Anstrichs erlaubt,
b) Ausbilden und Härten der auf dem Träger zu entfernenden Anstrichschicht,
c) gegebenenfalls Erwärmen des Trägers,
d) Entfernen der Anstrichschicht.

2. Verfahren nach Anspruch 1, dadurch gekennzeichnet, daß man die Anstrichschicht entfernt, indem man den Träger mit zumindest einem verflüssigten Gas, wie beispielsweise flüssigem Stickstoff, in Kontakt bringt.

3. Verfahren nach Anspruch 2, dadurch gekennzeichnet, daß man den Träger in zumindest ein verflüssigtes Gas eintaucht.

4. Verfahren nach einem der Ansprüche 1 bis 3, dadurch gekennzeichnet, daß es eine zum Schluß stattfindende mechanische Entfernungsphase umfaßt.

5. Verfahren nach einem der Ansprüch 1 bis 4, dadurch gekennzeichnet, daß der Träger während des Schritts c) auf eine Temperatur zwischen 150 und 250°C, vorzugsweise zwischen 200 und 220°C, erwärmt wird.

6. Verfahren nach einem der Ansprüche 1 bis 5, dadurch gekennzeichnet, daß man die Anstrichschicht auf dem Träger durch Aushärten in einem Ofen härtet.

7. Verfahren nach einem der Ansprüche 1 bis 6, dadurch gekennzeichnet, daß dem Schritt a) eine Behandlungsphase des Trägers mit einer oder mehreren Säuren vorgeschaltet ist.

8. Verfahren nach einem der Ansprüche 1 bis 7, dadurch gekennzeichnet, daß der Vorbehandlungsanstrich ein elektrisch leitendes Produkt umfaßt.

9. Verfahren nach Anspruch 8, dadurch gekennzeichnet, daß das elektrisch leitende Produkt Aluminiumpulver ist.

10. Verfahren nach einem der Ansprüch 1 bis 9, dadurch gekennzeichnet, daß der Vorbehandlungsanstrich in einem oder mehreren Lösungsmitteln aufgelöst wird.

11. Für die Durchführung des Verfahrens nach einem der Ansprüche 1 bis 10 geeignete Zusammensetzung, dadurch gekennzeichnet, daß sie einen Vorbehandlungsanstrich auf der Grundlage von Vinylharzen und/oder einen Vorbehandlungsanstrich auf der Grundlage von Polyurethanharzen oder Polyurethanharze sowie ein elektrisch leitendes Produkt umfaßt.

12. Zusammensetzung nach Anspruch 11, dadurch gekennzeichnet, daß der Vorbehandlungsanstrich in einem oder mehreren Lösungsmitteln aufgelöst wird.

13. Zusammensetzung nach einem der Ansprüche 11 oder 12, dadurch gekennzeichnet, daß das elektrisch leitfähige Produkt aus Aluminiumpulver besteht.

14. Zusammensetzung nach einem der Ansprüche 11 bis 13, dadurch gekennzeichnet, daß der Vorbehandlungsanstrich einen Standardvinylanstrich umfaßt.

15. Zusammensetzung nach einem der Ansprüche 11 bis 14, dadurch gekennzeichnet, daß er umfaßt: 78% Vinylanstrich, enthaltend 50% Standardvinylanstrich, 2% Aluminiumpulver, 12% chloriertes Lösungsmittel und 8% 1-2-Dichlorpropan oder Toluol.
